# FASCICULE DE BREVET EUROPEEN

(11) **EP 1 331 749 B1**
(45) Date de publication et mention de la délivrance du brevet: **04.11.2009**
(21) Numéro de dépôt: 03354008.9
(22) Date de dépôt: 29.01.2003
(51) Int. Cl.: H04L 5/02, H04B 3/52

(54) **Transmission de signaux sur un cable coaxial**
Mehrfachsignalübertragung über ein Koaxialkabel
Multiple signal transmission on a coaxial cable

(30) Priorité: 29.01.2002 FR 0201038
(43) Date de publication de la demande: 30.07.2003
(73) Titulaire: STMicroelectronics S.A., 92120 Montrouge (FR)
(72) Inventeur: Couet, Jean-Yves, 38950 Saint Martin Le Vinoux (FR)
(74) Mandataire: de Beaumont, Michel

(56) Documents cités:
- WO-A-99/37092
- US-B1- 6 334 219

## Description

La présente invention concerne un procédé et un dispositif de traitement de signaux pour leur transmission sur un câble coaxial.

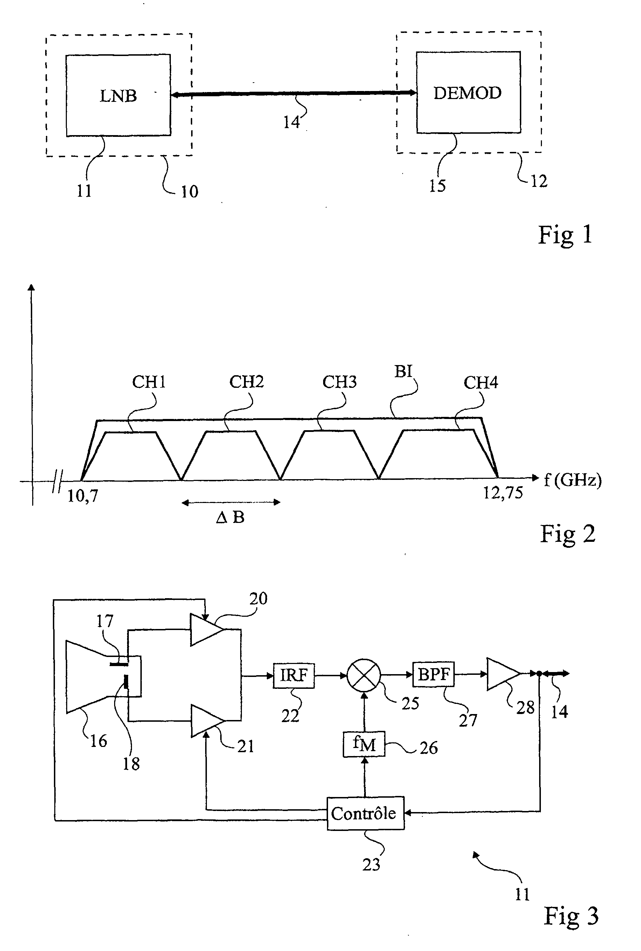

La figure 1 représente, de façon schématique, un dispositif de réception et de traitement de signaux analogiques modulés transmis par voie hertzienne, par exemple de signaux correspondant à des images vidéo. Cette architecture comprend une unité de réception 10 qui reçoit, par l'intermédiaire d'une antenne de réception, un signal analogique modulé correspondant à une onde électromagnétique transmise par voie hertzienne. L'unité de réception 10 comprend un bloc à faible bruit LNB 11 (Low Noise Block) qui réalise un prétraitement sur le signal modulé reçu. Le signal modulé prétraité est transmis à une unité de traitement de signaux 12 par l'intermédiaire d'un câble coaxial 14. L'unité de traitement 12 comprend un bloc de démodulation DEMOD 15 qui extrait un signal modulé "utile" dans le signal modulé transmis sur le câble coaxial 14 et démodule le signal "utile" extrait. Le signal "utile" démodulé peut, par exemple, être utilisé pour l'affichage d'images vidéo sur un écran de télévision. Dans ce cas, l'unité de réception 10 est située au niveau de l'antenne réceptrice et l'unité de traitement 12, sur laquelle le téléspectateur doit pouvoir agir, est située au niveau du poste de télévision.

La figure 2 représente un exemple schématique du spectre d'un signal analogique ou numérique modulé reçu par le bloc LNB 11. Le signal possède une bande de fréquence initiale IBW qui s'étend, par exemple, entre 10,7 GHz et 12,75 GHz, ce qui correspond à une bande de fréquence généralement utilisée pour la transmission de signaux entre un satellite et une station réceptrice au sol.

La bande de fréquence initiale IBW est divisée en canaux de fréquence. La largeur ΔB de bande de fréquence de chaque canal peut varier, par exemple, de 24 MHz à 36 MHz, quatre canaux CH1 à CH4 étant représentés à titre illustratif sur la figure 2. Le signal modulé initial reçu par l'unité de réception correspond à la somme de signaux "utiles" modulés. La bande de fréquence de chaque signal "utile" modulé est comprise dans l'un des canaux de fréquence CH1 à CH4. Les canaux de fréquence CH1 à CH4 associés à des signaux "utiles" d'une même polarisation sont distincts. Toutefois, le signal modulé initial peut correspondre à la somme de signaux dont les polarisations sont différentes. La polarisation peut être, par exemple, rectiligne (horizontale ou verticale), ou bien circulaire (droite ou gauche). Des ondes de polarisation différentes pouvant être aisément séparées dans un même signal, il est possible de transmettre dans un même signal initial des signaux "utiles" de polarisation différente associés à des canaux de fréquence qui se chevauchent.

Les principales fonctions du bloc LNB 11 sont les suivantes :
- amplifier les signaux reçus avec le plus petit facteur de bruit possible, typiquement de l'ordre du décibel ;
- sélectionner la polarisation du signal, par exemple horizontale ou verticale ;
- convertir les signaux reçus de la bande de fréquence initiale IBW en une bande de fréquence, appelée bande de transmission, adaptée à la bande passante du câble coaxial 14 et à la bande de fréquence de l'unité de traitement 12 (de façon typique entre 950 MHz et 2150 MHz), et
- limiter les signaux à transmettre à une certaine bande de fréquence.

La figure 3 représente de façon schématique un exemple d'architecture classique du bloc LNB 11. Le bloc LNB 11 est relié à une antenne 16 recevant le signal initial transmis par voie hertzienne. L'antenne 16 comprend deux foyers 17, 18. Chaque foyer 17, 18 capte un signal initial de polarisation déterminée dans la bande de fréquence initiale IBW. Par exemple, le foyer 18 peut capter un signal initial polarisé horizontalement, et le foyer 17 un signal initial polarisé verticalement. Chaque foyer 17, 18 est connecté par l'intermédiaire d'un amplificateur 20, 21 à un premier filtre IRF 22 (Image Rejection Filter). Les amplificateurs 20, 21 peuvent consister en des transistors à effet de champ à faible bruit. Une unité de contrôle 23 pilote les amplificateurs 20, 21 pour sélectionner l'un des deux signaux initiaux à polarisation déterminée.

Le signal initial à polarisation déterminée est alors transmis à un mélangeur 25 qui mélange le signal initial avec une fréquence de mélange f_{M}, émise par un synthétiseur de fréquence 26, pour déplacer la bande de fréquence initiale IBW du signal initial vers la bande de transmission. Le filtre IRF 22 a pour rôle d'éviter que des signaux parasites ne viennent perturber le signal obtenu suite au passage par le mélangeur 25. La fréquence f_{M} est fonction de la bande de fréquence initiale IBW et de la bande de transmission.

Le signal ainsi mélangé est transmis à un filtre passe-bande BPF 27 qui limite la bande de fréquence du signal à transmettre pour minimiser la quantité de puissance sur le câble coaxial 14. Le signal mélangé et filtré est enfin amplifié par un amplificateur 28 avant d'être transmis sur le câble coaxial 14.

La largeur de la bande de fréquence initiale IBW peut être plus large que la bande de transmission. Dans ce cas, le synthétiseur de fréquence 26 peut produire plusieurs fréquences de mélange. Chaque fréquence de mélange est adaptée pour que, lors de l'opération de mélange, une portion particulière de la bande de fréquence initiale IBW, de largeur similaire à la largeur de la bande de transmission, soit décalée vers les fréquences de la bande de transmission. Le choix de la fréquence de mélange est alors déterminé par l'unité de contrôle 23 en fonction de signaux de commande émis par l'unité de traitement 12 et transmis au bloc LNB 11 par le câble coaxial 14.

Une unité de traitement peut comprendre plusieurs blocs de démodulation de façon à traiter parallèlement plusieurs signaux "utiles" de même polarisation qui sont extraits du signal transmis par le câble coaxial.

Toutefois, il peut être souhaitable qu'une unité de traitement puisse traiter parallèlement plusieurs signaux "utiles" de polarisations différentes. De même, il peut être souhaitable qu'une unité de traitement puisse traiter parallèlement plusieurs signaux "utiles" issus d'un signal initial ayant une bande de fréquence initiale plus large que la bande de transmission, les signaux "utiles" étant issus de portions de bande de fréquence initiale différentes. Enfin, il peut être souhaitable qu'une unité de traitement puisse traiter parallèlement plusieurs signaux "utiles" issus de signaux initiaux ayant des bandes de fréquence initiale distinctes, en particulier dans le cas d'une antenne dite à orbites multiples qui comporte plusieurs foyers orientés pour recevoir des signaux hertziens de bandes de fréquence initiale distinctes.

Le dispositif de la figure 1 n'est alors plus adapté. En effet, à un même instant, le signal transmis sur le câble coaxial 14 ne peut provenir que d'un unique signal initial et n'avoir qu'une unique polarisation déterminée. En outre, lorsque la bande de fréquence initiale est plus large que la bande de transmission, le signal transmis sur le câble coaxial 14 ne peut correspondre qu'à une unique portion de la bande de fréquence initiale.

Il est alors nécessaire de prévoir plusieurs blocs LNB et de relier chacun d'entre eux à l'unité de traitement 12 par un câble coaxial dédié. Chaque bloc LNB transmet alors, sur le câble coaxial associé, un signal d'une certaine polarisation, et qui correspond à un signal de bande de fréquence initiale déterminée (et éventuellement à une certaine portion de la bande de fréquence du signal initial).

La multiplication des câbles coaxiaux présente un coût important étant donné qu'à chaque câble coaxial correspondent au moins quatre connecteurs, et que l'unité de traitement 12 doit comprendre des commutateurs associés à chaque câble. De plus, l'installation et l'entretien des câbles présentent un coût important.

Le document WO 99 37092 décrit un système de distribution de signaux de télévision, de signaux audio, de signaux audio numériques et/ou de signaux vidéo.

La présente invention vise à transmettre sur un unique câble coaxial, à un même instant, des signaux "utiles" pouvant présenter des polarisations différentes, et/ou être issus de signaux initiaux de bandes de fréquence initiales distinctes, et/ou, lorsque la bande de fréquence initiale est plus large que la bande de transmission, être issus de portions distinctes de la bande de fréquence initiale.

Pour atteindre cet objet, la présente invention prévoit un récepteur pouvant recevoir plusieurs signaux modulés initiaux dans une même bande de fréquence initiale et/ou des bandes de fréquences initiales distinctes et produire un signal modulé dans une bande de transmission à transmettre sur un câble coaxial, le récepteur comportant un sélectionneur pouvant sélectionner plusieurs signaux parmi les signaux reçus ; pour chaque signal sélectionné, un mélangeur propre à transformer le signal sélectionné en un signal au moins en partie dans la bande de transmission, et un filtre propre à extraire du signal transformé un signal associé à une portion de la bande de transmission parmi plusieurs portions de la bande de transmission au moins en partie distinctes ; et des moyens pour former le signal modulé dans la bande de transmission à partir des signaux associés aux portions de bande de transmission.

Chaque mélangeur est relié à un synthétiseur de fréquence propre à produire une fréquence de mélange déterminée, la fréquence déterminée étant fonction de la portion de la bande de transmission et du signal sélectionné.

Le récepteur comporte des foyers de réception, associés à une antenne, chaque foyer de réception pouvant recevoir un signal modulé initial, et des mélangeurs intermédiaires, chaque mélangeur intermédiaire étant propre à transformer le signal initial reçu par un foyer de réception en un signal intermédiaire dans une bande de fréquence intermédiaire différente de la bande de transmission, le sélectionneur recevant les signaux intermédiaires.

Le récepteur comporte une unité de contrôle recevant des signaux de commande par l'intermédiaire du câble coaxial et pilotant les synthétiseurs de fréquence en fonction des signaux de commande pour la production de la fréquence de mélange, et le sélectionneur pour la sélection des signaux reçus.

Selon un mode de réalisation de l'invention, les filtres sont des filtres passe-bande de bandes passantes distinctes, et pour un premier filtre dont la bande passante est à des fréquences supérieures à celles de la bande passante d'un second filtre, la différence entre le gain du second filtre et le gain du premier filtre à la fréquence limite supérieure de la bande passante du second filtre est supérieure à 30 décibels, et la différence entre le gain du premier filtre et le gain du second filtre à la fréquence limite inférieure de la bande passante du premier filtre est supérieure à 30 décibels.

Selon un mode de réalisation de l'invention, le synthétiseur de fréquence est propre à produire une fréquence de mélange dans une bande de fréquence dont la largeur est supérieure à la largeur de la bande de fréquence initiale ou à la somme des largeurs des bandes de fréquences initiales distinctes.

Selon un mode de réalisation de l'invention, au moins un synthétiseur de fréquence est adapté à transmettre directement au filtre correspondant un signal périodique de fréquence et de puissance déterminées.

La présente invention prévoit également un procédé de transformation de plusieurs signaux modulés reçus dans une même bande de transmission initiale et/ou des bandes de fréquence initiale distinctes en un signal modulé dans une bande de transmission, comportant les étapes consistant à sélectionner plusieurs signaux parmi les signaux reçus ; pour chaque signal sélectionné, transformer le signal sélectionné en un signal au moins en partie dans la bande de transmission, et extraire du signal transformé un signal associé à une portion de la bande de transmission parmi plusieurs portions de la bande de transmission au moins en partie distinctes ; et former le signal modulé dans la bande de transmission à partir des signaux associés aux portions de la bande de transmission.

Avant l'étape de sélection, chaque signal modulé reçu est transformé en un signal intermédiaire dans une bande de fréquence intermédiaire différente de la bande de transmission.

Chaque signal sélectionné est transformé en un signal au moins en partie dans la bande de transmission en mélangeant le signal sélectionné avec une fréquence de mélange fonction du signal sélectionné et de la portion de la bande de transmission.

Chaque signal sélectionné peut être amplifié par un gain variable avant d'être transformé et/ou après avoir été transformé en un signal au moins en partie dans la bande de transmission, le gain dépendant du signal sélectionné.

L'invention concerne également un procédé de test d'un récepteur selon l'invention relié, par l'intermédiaire du câble coaxial, à une unité de traitement adaptée à traiter le signal modulé dans la bande de transmission fourni par le récepteur dans un mode de fonctionnement normal, comprenant les étapes consistant en la transmission par l'unité de traitement au récepteur d'une requête associée à une fréquence déterminée ; l'émission par le récepteur d'un signal périodique correspondant à la réception par l'unité de traitement d'un signal périodique à la fréquence déterminée ; la détermination par l'unité de traitement de la puissance du signal périodique reçu à la fréquence déterminée ; et la détermination par l'unité de traitement de l'atténuation de puissance du câble coaxial à partir de la puissance du signal périodique reçu à la fréquence déterminée et de la puissance du signal périodique émis par le récepteur.

Selon un mode de réalisation de l'invention, le récepteur transmet successivement sur le câble coaxial, à réception de requêtes émises par l'unité de traitement, des signaux périodiques à des fréquences fixes différentes.

Selon un mode de réalisation de l'invention, le récepteur émet sur le câble coaxial un signal périodique à une première fréquence correspondant à la réception par l'unité de traitement d'un signal périodique à la fréquence déterminée, et un signal périodique à une seconde fréquence différente de la première fréquence, la différence entre les première et seconde fréquences étant représentative de la puissance du signal périodique à la première fréquence transmis par le récepteur.

Selon un mode de réalisation de l'invention, chaque synthétiseur de fréquence du récepteur est adapté à transmettre directement au filtre correspondant un signal périodique et le récepteur transmet à l'unité de traitement par le câble coaxial un signal correspondant à la somme de signaux périodiques fournis par les synthétiseurs de fréquence, chaque signal périodique étant à une fréquence égale à la fréquence moyenne d'une des portions de bande de transmission.

Cet objet, ces caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, mentionnée précédemment, représente de façon schématique un dispositif classique pour la réception et le traitement de signaux hertziens ;
la figure 2, mentionnée précédemment, illustre un exemple de représentation spectrale d'un signal hertzien ;
la figure 3, mentionnée précédemment, représente un exemple d'architecture classique d'un bloc à faible bruit ;
la figure 4 représente, de façon schématique, une architecture pour la réception et le traitement de signaux hertziens selon la présente invention ;
la figure 5 représente les spectres de plusieurs signaux illustrant le principe de l'invention ;
la figure 6 représente un exemple de réalisation de l'unité de réception de la figure 4 ;
la figure 7 représente un exemple de réalisation d'un élément de la figure 6 ;
la figure 8 représente l'allure du gabarit d'un filtre passe-bande utilisé dans la présente invention ; et
la figure 9 représente des exemples de valeur de gabarit du filtre passe-bande de la figure 8.

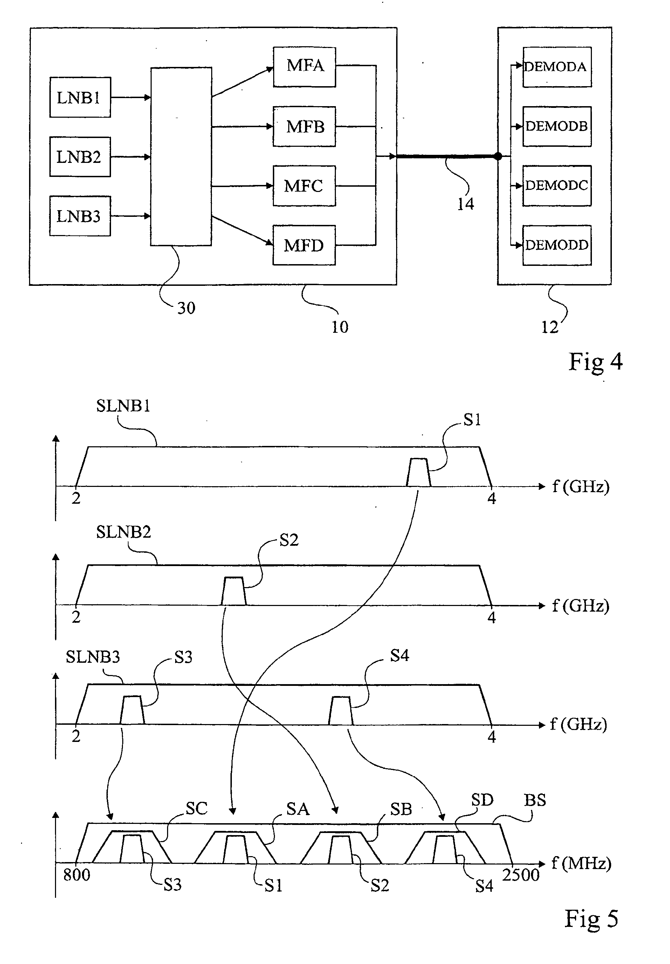

Comme cela est illustré sur la figure 4, le dispositif comprend une unité de réception 10 reliée par un câble coaxial 14 à une unité de traitement 12. A titre d'exemple, l'unité de traitement 12 comprend quatre blocs de démodulation DEMODA à DEMODD, chaque bloc de démodulation DEMODA à DEMODD comprenant, entre autre, un sélecteur de canaux et un démodulateur.

L'unité de réception 10 comprend trois blocs à faible bruit LNB1, LNB2, LNB3, qui ont une architecture similaire à celle du bloc LNB 11 représenté sur la figure 2. Plus précisément, chaque bloc à faible bruit LNB1 à LNB3 est adapté pour recevoir un signal hertzien dans une bande de fréquence initiale et émettre en sortie un signal d'une polarisation déterminée dans une bande de fréquence intermédiaire qui est inférieure à la bande de fréquence initiale et supérieure à la bande de transmission, ou similaire à la bande de transmission. A titre d'exemple, la bande de fréquence intermédiaire est d'environ de 2 à 4 GHz lorsqu'elle est inférieure à la bande de fréquence initiale et supérieure à la bande de transmission ou de 0.9 à 2.15 GHz lorsqu'elle est similaire à la bande de transmission. Chaque bloc à faible bruit LNB1 à LNB3 est connecté à un sélectionneur 30, lui-même relié à quatre blocs de mélange et de filtrage MFA à MFD. Le sélectionneur 30 peut transmettre l'une quelconque des sorties des blocs à faible bruit LNB1 à LNB3 à l'un quelconque des blocs de mélange et de filtrage MFA à MFD.

La figure 5 illustre le principe de l'invention. De haut en bas sont représentés de façon schématique les spectres SLNB1 à SLNB3 des signaux respectivement émis par les blocs LNB1 à LNB3. Pour les spectres SLNB1 et SLNB2, on a représenté à titre illustratif le spectre d'un signal "utile", respectivement S1 et S2. Pour le spectre SLNB3, on a représenté les spectres de deux signaux "utiles" S3 et S4. L'un des signaux émis par les blocs LNB1 à LNB3 est transmis par le sélectionneur 30 à chacun des blocs MFA à MFD. Par exemple, aux blocs MFA et MFB sont respectivement transmis les signaux émis par les blocs LNB1 et LNB2, et aux blocs MFC et MFD est transmis le signal émis par le bloc LNB3.

Chaque bloc MFA à MFD réalise une opération de décalage du signal depuis la bande de fréquence intermédiaire dans une bande de fréquence qui chevauche complètement ou en partie la bande de transmission. La bande de fréquence intermédiaire est choisie de façon à limiter la formation de signaux parasites lors de l'opération de décalage.

Chaque bloc MFA à MFD filtre ensuite le signal décalé et conserve une portion de la bande de fréquence décalée incluse dans la bande de transmission et comprenant le spectre du signal utile. Les différentes portions de bande de transmission sont respectivement référencées SA à SD pour les blocs de mélange et de sélection MFA à MFD.

Les différents signaux associés aux portions de bande de transmission SA à SD sont additionnés pour former un signal dont la bande de fréquence BS correspond sensiblement à la bande de transmission. Ce signal est ensuite transmis à l'unité de traitement 12 par le câble coaxial 14. Chaque bloc démodulateur DEMODA à DEMODD est adapté pour extraire et traiter dans le signal en bande de transmission un signal correspondant à l'une des portions de la bande de transmission.

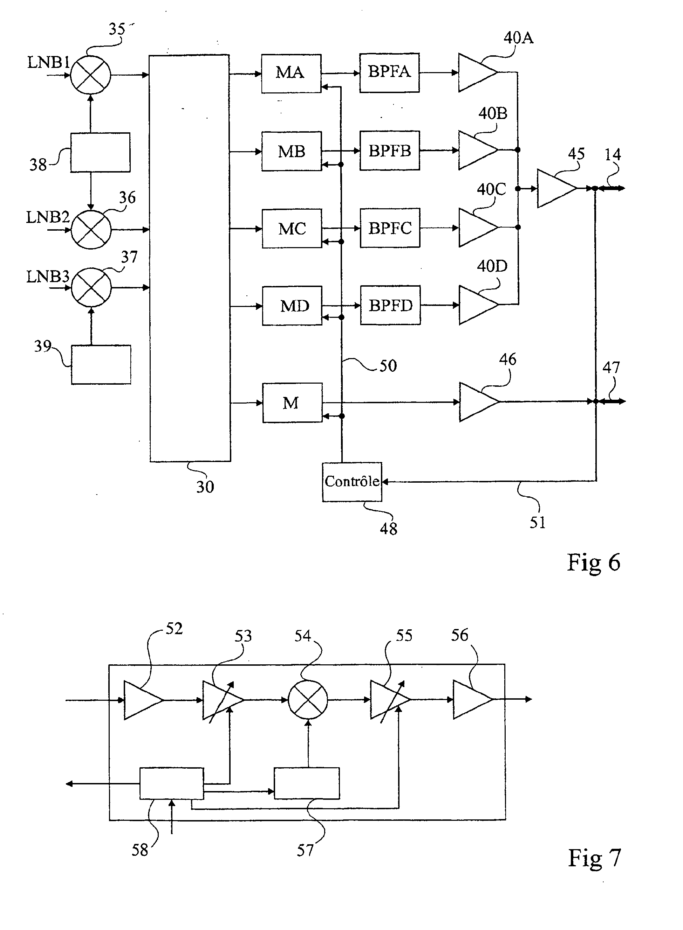

La figure 6 représente un exemple d'architecture plus détaillée de l'unité de réception de la figure 5. Sur la gauche de la figure sont seulement représentés les mélangeurs 35, 36, 37 associés aux blocs LNB1 à LNB3. A titre d'exemple, les fréquences de mélange alimentant les mélangeurs 35, 36 sont produites par un unique synthétiseur de fréquence 38. La fréquence de mélange alimentant le mélangeur 37 est produite par un synthétiseur de fréquence 39.

Le sélectionneur 30 reçoit en entrée les signaux émis par les blocs LNB1 à LNB3 et est relié en sortie à quatre blocs MFA à MFD, et à un bloc mélangeur M.

Chaque bloc de mélange et de sélection MFA à MFD comprend, montés en série, un bloc mélangeur MA à MD, un filtre passe-bande BPFA à BPFD et un amplificateur d'isolation 40A à 40D. Les signaux produits par les quatre blocs de mélange et de sélection MFA à MFD sont additionnés puis amplifiés par un amplificateur à gain fixe 45 avant d'être transmis par le câble coaxial 14. Le signal issu du bloc mélangeur M est amplifié par un amplificateur 46 et transmis par un câble coaxial auxiliaire 47. Une unité de contrôle 48 est reliée par un premier bus de commande 50 aux différents blocs mélangeurs M, MA à MD. L'unité de contrôle est également reliée aux câbles coaxiaux 14, 47 par un second bus de commande 51.

La figure 7 représente de façon plus détaillée l'architecture des blocs mélangeurs M, MA à MD. Chaque bloc mélangeur comprend, montés en série, un premier amplificateur à gain fixe 52, un premier amplificateur à gain variable 53, un mélangeur 54, un second amplificateur à gain variable 55 et un second amplificateur à gain fixe 56. Le mélangeur 54 est alimenté par une fréquence de mélange issue d'un synthétiseur de fréquence 57. Chaque bloc mélangeur M, MA à MD comprend également une unité de commande 58 connectée au premier bus de commande 50 et propre à commander le sélectionneur 30, le synthétiseur de fréquence 54, et les amplificateurs à gain variable 53, 55.

Le fonctionnement du dispositif des figures 6 et 7 est le suivant. En fonction des signaux « utiles » S1 à S4 à traiter par les blocs de démodulation DEMODA à DEMODD, l'unité de traitement 12 transmet des signaux de commande à l'unité de contrôle 48, par exemple selon le protocole de communication FSK (Frequency Shift Keying) ou le protocole connu sous la marque DiSEqC (Digital Satellite Equipment Control). L'unité de contrôle 48 transmet en conséquence des signaux de commande aux unités de commande 58 d'un ou de plusieurs blocs mélangeurs M, MA à MD, par l'intermédiaire du premier bloc de commande 50, par exemple selon le protocole de communication connu sous la marque I²C (Integrated Circuit Control).

L'unité de contrôle 58 ayant reçu les signaux de commande pilote alors les sélectionneurs 30 de façon que l'un des signaux produits par les blocs LNB1 à LNB3 soit transmis au bloc mélangeur associé M, MA à MD. L'unité de commande 58 pilote également le synthétiseur de fréquence 57 du bloc mélangeur MA à MD pour qu'il produise une fréquence de mélange adaptée de sorte que le signal reçu par le bloc mélangeur MA à MD soit correctement décalé en fréquence pour que la bande de fréquence du signal « utile » S1 à S4, après passage par le mélangeur 54, soit comprise dans la bande passante du filtre passe-bande BPFA à BPFD associé au bloc mélangeur MA à MD. Pour le bloc mélangeur M, l'unité de commande 58 pilote le synthétiseur de fréquence 57 du bloc mélangeur M pour qu'il produise une fréquence de mélange adaptée de sorte que le signal reçu par le bloc mélangeur M soit correctement décalé en fréquence pour que la bande de fréquence du signal émis par le bloc mélangeur M soit contenue dans la bande passante du câble coaxial auxiliaire 47, de façon générale la bande de transmission.

Les amplificateurs à gain variable 53, 55 permettent d'ajuster l'amplification du signal en amont ou en aval du mélangeur 54. Par exemple, si le signal initial est de faible amplitude, il peut être préférable de l'amplifier en amont du mélangeur 54. Si l'amplitude du signal initial est suffisante, mais que le câble coaxial est de longueur élevée, il peut être préférable d'amplifier le signal en aval du mélangeur 54 pour éviter des phénomènes d'écrêtage lors de l'opération de décalage. Chaque bloc mélangeur M, MA à MD peut consister en un circuit intégré.

Le câble coaxial auxiliaire 47 est prévu de façon à permettre l'utilisation de l'unité de réception selon l'invention avec une unité de traitement classique ne pouvant traiter le signal transmis sur le câble coaxial 14. En effet, le signal transmis sur le câble coaxial 47 est similaire avec le signal issu du bloc LNB de la figure 3.

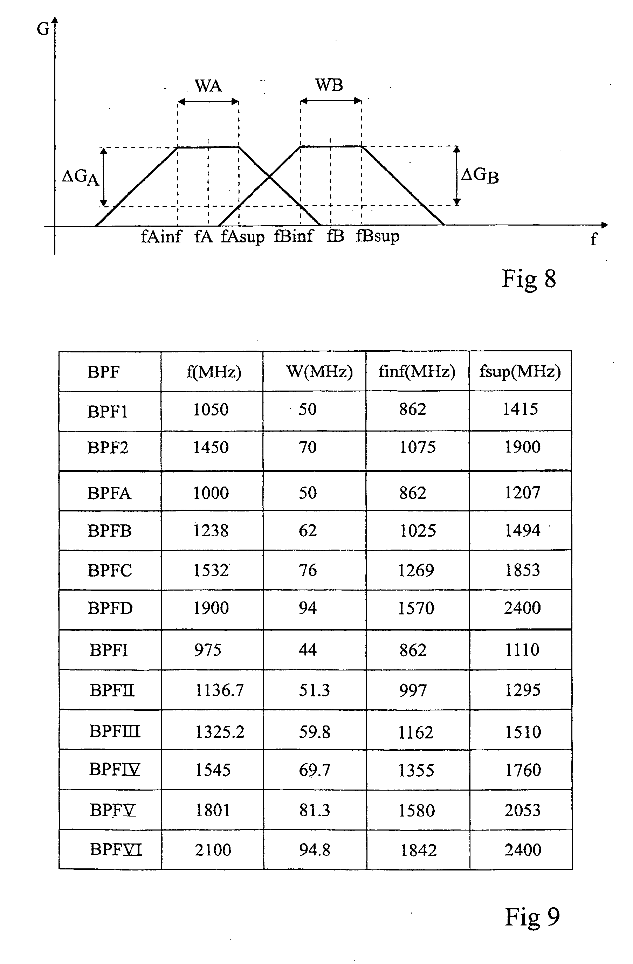

La figure 8 représente un exemple des gabarits de deux filtres passe-bande, par exemple BPFA et BPFB, dont les bandes passantes sont voisines. Chaque filtre comporte une bande passante, de largeur WA, WB, centrée sur une fréquence moyenne f_{A}, f_{B}, et limitée par une fréquence supérieure f_{ASUP}, f_{BSUP} et une fréquence inférieure f_{AINF}, f_{BINF}. Les gabarits sont déterminés de sorte que le gain du filtre BPFB à la fréquence f_{ASUP} présente un écart ΔGA d'au moins 30 dB avec le gain du filtre BPFA, et que le gain du filtre BPFA à la fréquence f_{BINF} présente un écart ΔGB d'au moins 30 dB avec le gain du filtre BPFB.

La figure 9 représente à titre d'exemple des valeurs numériques des caractéristiques des gabarits des filtres passe-bande de blocs de mélange et de sélection dans trois configurations différentes. La première configuration comprend deux blocs de mélange et de sélection (filtres passe-bande BPF1 et BPF2), la deuxième configuration comprend quatre blocs de mélange et de sélection (filtres passe-bande BPFA à BPFD), ce qui correspond par exemple à l'architecture de la figure 4, et la troisième configuration comprend six blocs de mélange et de sélection (filtres passe-bande BPFI et BPFVI). La deuxième colonne représente la fréquence moyenne f de la bande passante de chaque filtre passe-bande. La troisième colonne représente la largeur W de la bande passante de chaque filtre passe-bande. La quatrième colonne représente la fréquence inférieure f_{INF} de la bande passante de chaque filtre passe-bande et la cinquième colonne représente la fréquence supérieure f_{SUP} de la bande passante de chaque filtre passe-bande.

Comme cela apparaît sur la figure 8, les bandes passantes des filtres passe-bande dans toutes les configurations sont plus importantes que les largeurs de bande habituelles des canaux (d'environ 24 à 36 MHz). Les filtres passe bande peuvent être fabriqués de façon discrète.

La présente invention comporte de nombreux avantages.

Elle permet la transmission sur un même câble coaxial de signaux "utiles" pouvant présenter des polarisations différentes. En effet, les signaux issus des blocs à faible bruit LNB1 à LNB3, et qui seront traités par les blocs de mélange et de filtrage MFA à MFD, peuvent avoir des polarisations distinctes.

De plus, elle permet la transmission sur un même câble coaxial de signaux "utiles" pouvant être issus de signaux de bandes de fréquence initiales distinctes. En effet, deux signaux émis par deux blocs LNB1 à LNB3 peuvent avoir des bandes de fréquence initiales distinctes.

En outre, elle permet la transmission sur un même câble coaxial de signaux "utiles" pouvant, lorsque la bande de fréquence initiale est plus large que la bande de transmission, être issus de portions distinctes de la bande de fréquence initiale. En effet, deux signaux émis par deux blocs LNB1 à LNB3 peuvent correspondre à des portions distinctes de la bande de fréquence initiale d'un même signal.

La présente invention permet de réaliser de façon compacte une unité de réception de volume réduit.

La présente invention permet enfin de réaliser les filtres passe-bande par des composants discrets relativement peu coûteux.

Selon un autre mode de réalisation de l'invention, le synthétiseur de fréquence de chaque bloc de mélange, qui décale le signal depuis la bande de fréquence intermédiaire vers la bande de fréquence finale, fournit une fréquence de mélange, appelée seconde fréquence de mélange, qui peut varier dans une bande de fréquence plus large que la bande initiale. La plage de la seconde fréquence de mélange est telle qu'un seul synthétiseur de fréquence peut être utilisé pour la conversion du signal depuis la bande de fréquence initiale vers la bande de fréquence intermédiaire. Ce synthétiseur fournit la même fréquence de mélange déterminée, appelée première fréquence de mélange, pour tous les signaux issus des blocs à faible bruit. Les conversions du signal à traiter depuis la bande de fréquence initiale vers la bande de fréquence intermédiaire et depuis la bande de fréquence intermédiaire vers la bande de fréquence finale peuvent être deux conversions infra-hétérodynes ou supra-hétérodynes. Le filtre passe-bande associé à un bloc de mélange a une largeur de bande adaptée à sélectionner, dans le signal fourni par le bloc mélangeur, le signal "utile". Les signaux "utiles" sélectionnés sont alors ajoutés pour former le signal transmis sur le câble coaxial comme cela a été décrit précédemment.

A titre d'exemple, si la bande de fréquence initiale est entre 10.7 GHz et 12.75 GHz, la première fréquence de mélange peut être 13.25 GHz et la seconde fréquence de mélange peut être choisie entre 1.9 GHz et 4.3 GHz. Dans cet exemple, les conversions du signal reçu depuis la bande de fréquence initiale vers la bande de fréquence intermédiaire et depuis la bande de fréquence intermédiaire vers la bande de fréquence finale sont des conversions supra-hétérodynes. Le spectre du signal à traiter est donc inversé deux fois.

La largeur du filtre passe-bande associé avec un bloc mélangeur peut être choisie de façon que la fréquence inférieure du filtre passe-bande correspond à la fréquence la plus élevée de la bande de fréquence finale lorsque la seconde fréquence de mélange est fixée à sa valeur la plus basse. Dans le présent exemple, la fréquence inférieure du filtre passe-bande est 1.4 GHz lorsque la seconde fréquence de mélange est à 1.9 GHz. La fréquence supérieure du filtre passe-bande correspond à la fréquence la plus basse lorsque la seconde fréquence de mélange est fixée à sa valeur la plus élevée. Dans le présent exemple, la fréquence supérieure du filtre passe-bande est 1.75 GHz lorsque la seconde fréquence de mélange est à 4.3 GHz. Pour un câble coaxial ayant une bande passante entre 950 MHz et 2150 MHz, trois blocs mélangeur et les filtres associés peuvent être prévus dans le présent exemple.

Ce mode de réalisation de l'invention fournit des avantages supplémentaires.

Lorsque la bande de fréquence de la seconde fréquence de mélange est suffisamment large, ce mode de réalisation permet l'utilisation d'une seule première fréquence de mélange pour la conversion du signal à traiter depuis la bande de fréquence initiale vers la bande de fréquence intermédiaire. Un seul synthétiseur peut alors être utilisé pour fournir la première fréquence de mélange. Le nombre de blocs à faible bruit peut alors être réduit au nombre de polarisations possibles du signal à traiter. Un boîtier plus petit et plus léger peut en outre être prévu pour recevoir l'unité de réception, et les blindages de protection des lignes transportant les signaux à haute tension et le sélectionneur sont simplifiés.

Ce mode de réalisation peut facilement être rendu compatible avec une unité de réception selon l'art antérieur qui transmet sur le câble coaxial un seul signal occupant la totalité de la bande de transmission. Un large filtre passe-bande supplémentaire, par exemple ayant une bande passante égale à la bande de transmission, est prévu en parallèle avec un filtre passe-bande "normal" relié à un bloc mélangeur. En mode de fonctionnement normal, le large filtre passe-bande est désactivé. Lorsque l'unité de réception doit fonctionner comme une unité de réception selon l'art antérieur, le large filtre passe-bande est commuté et tous les blocs mélangeurs sont désactivés, à l'exception du bloc mélangeur relié au large filtre passe-bande supplémentaire. Le filtre passe-bande "normal" relié au bloc mélangeur activé est également désactivé. La seconde fréquence de mélange du bloc mélangeur activé est choisie de façon que les conversions du signal à traiter depuis la bande de fréquence initiale vers la bande de fréquence intermédiaire et depuis la bande de fréquence intermédiaire vers la bande de fréquence finale sont équivalentes à une seule conversion avec une fréquence de mélange équivalente égale à 9.75 GHz ou 10.6 GHz, dans le présent exemple, selon la bande du signal reçu que l'on souhaite transmettre sur le câble coaxial. Dans l'exemple précédent, pour obtenir une fréquence de mélange équivalente égale à 9.75 GHz, la seconde fréquence de mélange est fixée à 3500 MHz. Pour obtenir une fréquence de mélange équivalente égale à 10.6 GHz, la seconde fréquence de mélange est fixée à 2650 MHz.

Ce mode de réalisation est donc compatible avec une unité de traitement selon l'art antérieur sans nécessiter l'ajout d'un autre câble coaxial ou sans modifier le sélectionneur.

Selon un autre mode de réalisation de l'invention, non représenté, l'unité de réception peut fonctionner dans un mode de contrôle. Dans un tel mode, le synthétiseur de fréquence 57 d'un des blocs mélangeurs MA à MD ne fournit plus une fréquence de mélange au mélangeur 54 du bloc mélangeur comme cela a été décrit précédemment, mais directement au filtre passe-bande BPFA à BPFD relié audit bloc mélangeur, par l'intermédiaire d'un diviseur de fréquence. Ce synthétiseur de fréquence est appelé par la suite synthétiseur de contrôle lorsqu'on réalise une opération de contrôle.

La fréquence du signal émis par le synthétiseur de fréquence 57 est divisée lorsque ce signal est directement transmis au filtre passe-bande BPFA à BPFD pour que ce dernier reçoive un signal ayant une fréquence fixe appartenant à la bande de transmission.

Une opération de contrôle peut consister en la détermination des pertes du câble coaxial 14. Elle comprend alors, par exemple, les étapes suivantes :
- l'unité de traitement 12 transmet à l'unité de contrôle 48 de l'unité de réception 10 une commande pour éteindre l'ensemble des blocs mélangeurs MA à MD, par exemple en coupant leur alimentation. La commande est transmise par exemple selon le protocole connu sous la marque DiSEq1. Il s'agit d'un protocole d'échange de données dans une seule direction à savoir depuis l'unité de traitement 12 vers l'unité de réception 10. Sa mise en oeuvre est plus simple que celle du protocole connu sous la marque DiSEq2 qui est adapté à un échange de données bidirectionnel entre l'unité de traitement 12 et l'unité de réception 10 ;
- un des blocs de démodulation DEMODA à DEMODD de l'unité de traitement 12, ou l'unique bloc de démodulation, est piloté de façon à extraire du signal reçu depuis le câble coaxial un signal à une fréquence fixe déterminée, appelée fréquence de contrôle, par exemple 1700 MHz. On vérifie alors que la puissance du signal reçu à la fréquence de contrôle est très faible ;
- l'unité de traitement 12 transmet à l'unité de contrôle 48 une nouvelle commande pour que le synthétiseur de contrôle fournisse au filtre passe-bande un signal de fréquence fixe. La fréquence du signal reçu par le filtre passe-bande est légèrement supérieure à la fréquence de contrôle, par exemple de 2 MHz pour tenir compte d'un décalage en fréquence systématique présent au niveau du bloc de démodulation ;
- le bloc de démodulation de l'unité de traitement 12 extrait à nouveau le signal à la fréquence de contrôle. On détermine alors la puissance du signal reçu à la fréquence de contrôle, ou puissance reçue P_{R} ;
- l'atténuation du câble est obtenue en déterminant la différence entre la puissance émise au niveau de la sortie de l'unité de réception 10 (c'est-à-dire au niveau de la connexion entre l'unité de réception 10 et le câble coaxial 14), appelée puissance transmise P_{T}, et la puissance reçue P_{R}, exprimées en décibels ;
- l'unité de traitement 12 transmet alors à l'unité de contrôle 48 une nouvelle commande pour éteindre le synthétiseur de contrôle. L'opération de contrôle est ainsi achevée.

La puissance transmise P_{T} peut être déterminée selon l'une des façons suivantes :
- la valeur de la puissance transmise P_{T} correspond à une valeur prédéfinie fixée à l'avance. Bien que de conception particulièrement simple, la précision de l'atténuation ainsi déterminée est relativement faible ;
- plusieurs valeurs de la puissance transmise P_{T} à différentes fréquences sont stockées au niveau de l'unité de réception 10 et ces valeurs sont transmises par l'unité de réception à l'unité de traitement lors de l'opération de contrôle, par exemple en utilisant le protocole d'échange de données connu sous la marque DiSEqC 2 ;
- la valeur de la puissance transmise P_{T} est transmise par l'unité de réception 10 à l'unité de traitement 12 directement au moyen du synthétiseur de contrôle comme cela sera détaillé par la suite.

Le présent mode de réalisation permet de façon simple de déterminer les caractéristiques du câble coaxial.

De plus, l'opération de contrôle de l'atténuation peut être réalisée pour plusieurs fréquences également réparties, par exemple avec un pas de 50 MHz. Un traitement est alors effectué sur les valeurs de puissance reçues P_{R} pour obtenir une fonction représentative de la puissance reçue P_{R} en fonction de la fréquence. Lorsque la puissance reçue P_{R} est faible pour toutes les fréquences, cela peut correspondre à un contact de mauvaise qualité ou à un mauvais fonctionnement de l'unité de réception. Lorsque la fonction représentative de la puissance reçue P_{R} en fonction de la fréquence comporte des ondulations, cela peut correspondre à une mauvaise adaptation en impédance, à un connecteur mal vissé, etc. Lorsque la puissance reçue P_{R} chute fortement en fonction de la fréquence, cela peut correspondre à un câble de mauvaise qualité. L'unité de traitement peut comprendre une interface pour indiquer à un utilisateur les résultats du contrôle.

Ce mode de réalisation permet également à l'unité de réception 10 de transmettre des données à l'unité de traitement 12 même si elle ne dispose pas d'un protocole d'échange de données bidirectionnel entre l'unité de réception et l'unité de traitement, par exemple le protocole connu sous la marque DiSEqC 2.

A titre d'exemple, les données transmises peuvent correspondre aux fréquences moyennes des sous-bandes de fréquence fournies par les filtres passe-bande BPFA à BPFD. Dans cet exemple, chaque synthétiseur de fréquence d'un bloc mélangeur MDA à MDD peut fournir un signal de fréquence donnée directement au filtre passe-bande BPFA à BPFD associé audit bloc mélangeur. A réception d'une commande transmise par l'unité de traitement, l'unité de contrôle 58 commande les synthétiseurs de fréquence de façon que chaque synthétiseur de fréquence fournit au filtre passe-bande associé un signal dont la fréquence correspond à la fréquence moyenne de la bande passante du filtre passe-bande associé. Les différents signaux à fréquence fixe sont alors additionnés et le signal ainsi formé est transmis sur le câble coaxial. Les valeurs des fréquences moyennes sont par exemple mémorisées au niveau de l'unité de contrôle. L'unité de traitement balaye alors le signal reçu sur toute la bande de transmission pour déterminer les fréquences moyennes.

La donnée transmise peut également correspondre à la puissance transmise P_{T}. Un seul synthétiseur de contrôle est alors nécessaire. Des valeurs de la puissance transmise P_{T} par l'unité de réception 10 à différentes fréquences sont dans ce cas mémorisées au niveau de l'unité de réception 10. L'unité de traitement 12 transmet à l'unité de réception 10 une requête qui indique une fréquence déterminée pour laquelle l'unité de traitement 12 souhaite connaître la puissance transmise P_{T} par l'unité de réception 10. L'unité de contrôle 48 commande alors le synthétiseur de contrôle de sorte qu'il fournit directement au filtre passe-bande associé un premier signal dont la fréquence, après division, est égale à la fréquence déterminée. Lorsque l'unité de traitement 12 a déterminé la fréquence du signal transmis sur le câble coaxial 14, il transmet à l'unité de réception 10 une requête de poursuite. L'unité de contrôle 48 commande alors le synthétiseur de contrôle de sorte qu'il fournit directement au filtre passe-bande associé un second signal dont la fréquence, après division, est décalée par rapport à la fréquence déterminée. Le décalage entre la fréquence déterminée du premier signal et la fréquence du second signal est représentatif de la puissance transmise P_{T} à la fréquence déterminée.

Bien entendu, la présente invention est susceptible de diverses variantes et modifications qui apparaîtront à l'homme de l'art. En particulier, l'unité de contrôle 48 peut être supprimée, les unités de commande 58 des blocs mélangeurs M, MA à MD étant directement connectées au second bus de commande et recevant directement les signaux émis par l'unité de traitement 12.

## Revendications

1. Récepteur (10) pouvant recevoir plusieurs signaux modulés initiaux dans une même bande de fréquence initiale et/ou des bandes de fréquences initiales distinctes et produire un signal modulé dans une bande de transmission à transmettre sur un câble coaxial (14), **caractérisé en ce qu'**il comporte :
des foyers de réception, associés à une antenne, chaque foyer de réception étant adapté à recevoir l'un des signaux modulés initiaux, de polarisation déterminée ;
des premiers mélangeurs (35, 36, 37), chaque premier mélangeur (35, 36, 37) étant adapté à transformer le signal initial reçu par chaque foyer de réception en un signal intermédiaire dans une bande de fréquence intermédiaire différente de la bande de transmission ;
un sélectionneur (30) recevant les signaux intermédiaires et adapté à sélectionner plusieurs signaux parmi les signaux intermédiaires reçus ;
pour chaque signal sélectionné :
un second mélangeur (54) relié à un synthétiseur de fréquence (57) adapté à produire une fréquence de mélange déterminée et adapté à transformer le signal sélectionné en un signal au moins en partie dans la bande de transmission ; et
un filtre passe-bande (BPFA à BPFD) adapté à extraire du signal transformé un signal associé à une portion de la bande de transmission parmi plusieurs portions de la bande de transmission au moins en partie distinctes, la fréquence de mélange étant fonction de la portion de la bande de transmission et du signal sélectionné ;
des moyens adaptés à additionner les signaux associés aux portions de bande de transmission pour former le signal modulé dans la bande de transmission ; et
une unité de contrôle (48) adaptée à recevoir des signaux de commande par l'intermédiaire du câble coaxial et à piloter les synthétiseurs de fréquence (57) en fonction des signaux de commande pour la production des fréquences de mélange correspondantes, et le sélectionneur (30) pour la sélection des signaux intermédiaires.

2. Récepteur selon la revendication 1, **caractérisé en ce que** les filtres (BPFA à BPFD) sont des filtres passe-bande de bandes passantes (WA, WB) distinctes, et **en ce que** pour un premier filtre dont la bande passante est à des fréquences supérieures à celles de la bande passante d'un second filtre, la différence entre le gain du second filtre et le gain du premier filtre à la fréquence limite supérieure (f_{ASUP}) de la bande passante du second filtre est supérieure à 30 décibels, et la différence entre le gain du premier filtre et le gain du second filtre à la fréquence limite inférieure (f_{BINF}) de la bande passante du premier filtre est supérieure à 30 décibels.

3. Récepteur selon la revendication 1, **caractérisé en ce que** le synthétiseur de fréquence (57) est propre à produire une fréquence de mélange dans une bande de fréquence dont la largeur est supérieure à la largeur de la bande de fréquence initiale ou à la somme des largeurs des bandes de fréquences initiales distinctes.

4. Récepteur selon la revendication 1, **caractérisé en ce qu'**au moins un synthétiseur de fréquence (57) est adapté à transmettre directement au filtre (BPFA à BPFD) correspondant un signal périodique de fréquence et de puissance déterminées.

5. Procédé de transformation de plusieurs signaux modulés reçus dans une même bande de transmission initiale et/ou des bandes de fréquences initiales distinctes en un signal modulé dans une bande de transmission, **caractérisé en ce qu'**il comporte les étapes suivantes :
recevoir des signaux de commande par l'intermédiaire du câble coaxial ;
transformer chaque signal modulé reçu en un signal intermédiaire dans une bande de fréquence intermédiaire différente de la bande de transmission ;
sélectionner plusieurs signaux parmi les signaux intermédiaires en fonction des signaux de commande ;
pour chaque signal sélectionné, transformer le signal sélectionné en un signal au moins en partie dans la bande de transmission en mélangeant le signal sélectionné avec une fréquence de mélange, et extraire du signal transformé, par filtrage passe-bande, un signal associé à une portion de la bande de transmission parmi plusieurs portions de la bande de transmission au moins en partie distinctes, la fréquence de mélange étant fonction du signal sélectionné, de la portion de la bande de transmission et des signaux de commande ; et
additionner les signaux associés aux portions de la bande de transmission pour former le signal modulé dans la bande de transmission .

6. Procédé selon la revendication 5, **caractérisé en ce que** chaque signal sélectionné peut être amplifié par un gain variable avant d'être transformé et/ou après avoir été transformé en un signal au moins en partie dans la bande de transmission, le gain dépendant du signal sélectionné.

7. Procédé selon la revendication 5 mise en oeuvre avec un récepteur (10) selon la revendication 4, relié, par l'intermédiaire du câble coaxial (14), à une unité de traitement (12) adaptée à traiter le signal modulé dans la bande de transmission fourni par le récepteur dans un mode de fonctionnement normal, comprenant en outre les étapes suivantes :
- transmission par l'unité de traitement au récepteur d'une requête associée à une fréquence déterminée ;
- émission par le récepteur d'un signal périodique correspondant à la réception par l'unité de traitement d'un signal périodique à la fréquence déterminée ;
- détermination par l'unité de traitement de la puissance du signal périodique reçu à la fréquence déterminée ; et
- détermination par l'unité de traitement de l'atténuation de puissance du câble coaxial à partir de la puissance du signal périodique reçu à la fréquence déterminée et de la puissance du signal périodique émis par le récepteur.

8. Procédé selon la revendication 7, **caractérisé en ce que** le récepteur (10) transmet successivement sur le câble coaxial (14), à réception de requêtes émises par l'unité de traitement (12), des signaux périodiques à des fréquences fixes différentes.

9. Procédé selon la revendication 7, **caractérisé en ce que** le récepteur (10) émet sur le câble coaxial (14) un signal périodique à une première fréquence correspondant à la réception par l'unité de traitement (12) d'un signal périodique à la fréquence déterminée, et un signal périodique à une seconde fréquence différente de la première fréquence, la différence entre les première et seconde fréquences étant représentative de la puissance du signal périodique à la première fréquence transmis par le récepteur.

10. Procédé selon la revendication 7, **caractérisé en ce que** chaque synthétiseur de fréquence (57) du récepteur (10) est adapté à transmettre directement au filtre (BPFA à BPFD) correspondant un signal périodique, et **en ce que** le récepteur transmet à l'unité de traitement (12) par le câble coaxial (14) un signal correspondant à la somme de signaux périodiques fournis par les synthétiseurs de fréquence, chaque signal périodique étant à une fréquence égale à la fréquence moyenne d'une des portions de bande de transmission.

## Claims

1. A receiver (10) that can receive several initial signals modulated in a same initial frequency band and/or distinct initial frequency bands and generate a signal modulated in a transmission band to be transmitted on a coaxial cable (14), **characterized in that** it comprises:
focal points, associated with an antenna, each receive focal point being able to receive one of the initial modulated signal having a determined polarization;
first mixers (35, 36, 37), each intermediary mixer (35, 36, 37) being capable of transforming the initial signal received by each receive focal point into an intermediary signal in an intermediary frequency band different from the transmission band;
a selector (30) receiving the intermediary signals and capable of selecting several signals from among the received intermediary signals;
for each selected signal:
a second mixer (54) connected to a frequency synthesizer (57) capable of generating a determined mixing frequency and adapted to transforming the selected signal into a signal at least partly in the transmission band; and
a bandpass filter (BPFA to BPFD) capable of extracting from the transformed signal a signal associated with a portion of the transmission band from among several at least partly distinct portions of the transmission band, the mixing frequency being a function of the portion of the transmission band and of the selected signal;
means adapted to add the signals associated with the transmission band portions to form the signal modulated in the transmission band; and
a control unit (48) capable of receiving control signals via the coaxial cable and driving the frequency synthesizers (57) according to the control signals for the generation of the corresponding mixing frequencies, and the selector (30) for the selection of the intermediary signals.

2. The receiver of claim 1, **characterized in that** the filters (BPFA to BPFD) are bandpass filters of distinct passbands (WA, WB), and wherein for a first filter, the passband of which is at frequencies greater than those of the passband of a second filter, the difference between the gain of the second filter and the gain of the first filter at the upper limiting frequency (f_{ASUP}) of the passband of the second filter is greater than 30 decibels and the difference between the gain of the first filter and the gain of the second filter at the lower limiting frequency (f_{BINF}) of the passband of the first filter is greater than 30 decibels.

3. The receiver of claim 1, **characterized in that** the frequency synthesizer (57) is adapted to provide a determined mixing frequency in a frequency band, the width of which being higher than the width of the initial frequency band or the sum of the widths of the distinct initial frequency bands.

4. The receiver of claim 1, **characterized in that** at least one frequency synthesizer (57) is adapted to transmit directly to the respective filter (BPFA to BPFD) a periodic signal at a predetermined frequency and power.

5. A method for transforming several modulated signals received in a same initial frequency band and/or distinct initial frequency bands into a signal modulated in a transmission band, **characterized in that** it comprises the steps of:
receiving control signals via the coaxial cable;
transforming each received modulated signal into an intermediary signal in an intermediary frequency band different from the transmission band;
selecting several signals from among the intermediary signals as a function of control signals;
for each selected signal, transforming the selected signal into a signal at least partly in the transmission band by mixing the selected signal with a mixing frequency, and extracting from the transformed signal by bandpass filtering a signal associated with a portion of the transmission band from among several portions of the transmission band, at least partly distinct the mixing frequency depending on the selected signal, on the portion of the transmission band and on control signal; and
adding the signal associated with the transmissions and portions to form the modulated signal in the transmission band.

6. The method of claim 5, **characterized in that** each selected signal is amplified at a variable gain before being transformed and/or after having been transformed into a signal at least partly in the transmission band, the gain depending on the selected signal.

7. The method of claim 5 implemented by a receiver (10) according to claim 4, linked, by means of the coaxial cable (14), to a processing unit (12) adapted to process the signal modulated in the transmission band provided by the receiver in normal operation, further comprising:
the transmission from the processing unit to the receiver of a request related to a determined frequency;
the transmission from the receiver of a periodic signal corresponding to the receipt by the processing unit if a periodic signal at the determined frequency;
the determination by the processing unit of the power of the received periodic signal at the determined frequency; and
the determination by the processing unit of the power attenuation of the coaxial cable from the power of the received periodic signal at the determined frequency and the power of the periodic signal transmitted by the receiver.

8. The method according to claim 7, **characterized in that** the receiver (10) transmits successively through the coaxial cable (14), upon receipt of requests from the processing unit (12), periodic signals at different fixed frequencies.

9. The method according to claim 7, wherein the receiver (10) provides through the coaxial cable (14) a periodic signal at a first frequency corresponding to the receipt by the processing unit (12) of a periodic signal at the determined frequency, and a periodic signal at a second frequency different from the first frequency, the difference between the first and the second frequencies being representative of the power of the periodic signal at the first frequency transmitted by the receiver.

10. The method according to claim 7, **characterized in that** each frequency synthesizer (57) of the receiver (10) is adapted to transmit directly to the respective filter (BPFA to BPFD) a periodic signal, and wherein the receiver transmits to the processing unit (12), through the coaxial cable (14), a signal corresponding to the sum of periodic signals provided by the frequency synthesizers, each periodic signal being at frequency equal to the average frequency of one of the portions of the transmission band.

## Patentansprüche

1. Ein Empfänger (10), der mehrere anfängliche Signale empfangen kann, moduliert in einem gleichen anfänglichen Frequenzband und/oder unterschiedlichen anfänglichen Frequenzbändern und ein Signal generieren kann, dass in einem Sendeband moduliert wird, dass auf einem koaxialen Kabel (14) gesendet werden soll, **gekennzeichnet dadurch, dass** es Folgendes aufweist:
Brennpunkte bzw. Foki, assoziiert mit einer Antenne, wobei jeder Empfangsbrennpunkt in der Lage ist zum Empfangen von einem anfänglichen modulierten Signal mit einer bestimmten Polarisation;
erste Mischer (35, 36, 37), wobei jeder dazwischen liegende Mischer bzw. Zwischenmischer (35, 36, 37) in der Lage ist zum Transformieren des anfänglichen Signals empfangen von jedem der Empfangsbrennpunkte in einem dazwischen liegendem Signal bzw. Zwischensignal in einem dazwischen liegendem Frequenzband bzw. Zwischenfrequenzband unterschiedlich zu dem Sendeband;
eine Auswahlvorrichtung (30), die die dazwischen liegenden Signale empfängt, und in der Lage ist zum Auswählen von mehreren Signalen unter den empfangenen dazwischen liegenden Signalen bzw. Zwischensignalen;
für jedes ausgewählte Signal:
einen zweiten Mischer (54) verbunden mit einem Frequenzsynthesizer (57), der in der Lage ist zum Generieren einer bestimmten Mischfrequenz und angepasst ist zum Transformieren des ausgewählten Signals in ein Signal, das wenigstens teilweise in dem Sendeband ist; und
einen Bandpassfilter (BPFA bis BPFD) in der Lage zum Extrahieren aus dem transformierten Signal ein Signal assoziiert mit einem Teil des Sendebandes unter mehreren von wenigstens teilweise unterschiedlichen Teilen des Sendebandes, wobei die Mischfrequenz eine Funktion des Teils des Sendebandes und des ausgewählten Signals ist;
Mittel angepasst zum Addieren der Signale assoziiert mit den Sendebandteilen, um das Signal, das in dem Sendeband moduliert ist, zu bilden; und
eine Steuereinheit (48) in der Lage zum Empfangen von Steuersignalen über das koaxiale Kabel und zum Einstellen der Frequenzsynthesizer (57) gemäß den Steuersignalen für die Generierung der entsprechenden Mischfrequenzen, und wobei die Auswahlvorrichtung (30) für die Auswahl der dazwischen liegenden Signale bzw. Zwischensignale ist.

2. Empfänger nach Anspruch 1, **gekennzeichnet dadurch, dass** die Filter (BPFA bis BPFD) Bandpassfilter mit unterschiedlichen Passbändern (WA, WB) sind, und wobei für ein erstes Filter das Passband bei Frequenzen, die größer sind als diejenigen des Passbands eines zweiten Filters, die Differenz zwischen der Verstärkung des zweiten Filters und der Verstärkung des ersten Filters bei der oberen Grenzfrequenz (f_{ASUP}) des Passbandes des zweiten Filters größer als dreißig Dezibel ist und der Unterschied zwischen der Verstärkung des ersten Filters und der Verstärkung des zweiten Filters bei der unteren Grenzfrequenz (F_{BINF}) des Passbandes des ersten Filters größer als 30 Dezibel ist.

3. Empfänger nach Anspruch 1, **gekennzeichnet dadurch, dass** der Frequenzsynthesizer (57) angepasst ist zum Vorsehen einer bestimmten Mischfrequenz in einem Frequenzband, wobei die Breite davon höher ist als die Breite des anfänglichen Frequenzbandes oder die Summe der Breiten der unterschiedlichen anfänglichen Frequenzbänder.

4. Empfänger nach Anspruch 1, **gekennzeichnet dadurch, dass** wenigstens ein Frequenzsynthesizer (57) angepasst ist zum direkten Senden zum entsprechenden Filter (BPFA bis BPFD), und zwar eines periodischen Signals bei einer vorbestimmten Frequenz und Leistung.

5. Ein Verfahren zum Transformieren von mehreren modulierten Signalen empfangen in einem gleichen anfänglichen Frequenzband und/oder unterschiedlichen anfänglichen Frequenzbändern in ein Signal moduliert in einem Sendeband, **gekennzeichnet dadurch, dass** es die folgenden Schritte aufweist:
Empfangen von Steuersignalen über das koaxiale Kabel;
Transformieren von jedem empfangenen modulierten Signal in ein dazwischen liegendes Signal bzw. Zwischensignal in einem dazwischen liegenden Frequenzband bzw. Zwischenfrequenzband unterschiedlich dem Sendeband;
Auswählen von mehreren Signalen unter den dazwischen liegenden Signalen als eine Funktion der Steuersignale;
für jedes ausgewählte Signal, Transformieren des ausgewählten Signals in ein Signal, das wenigstens teilweise in dem Sendeband ist, und zwar durch Mischen des ausgewählten Signals mit einer Mischfrequenz, und Extrahieren, durch Bandpassfilterung von dem transformierten Signal, eines Signals assoziiert mit einem Teil des Sendebandes unter mehreren Teilen des Sendebandes, das wenigstens teilweise unterschiedlich zu der Mischfrequenz ist, abhängig von dem ausgewählten Signal, dem Teil des Sendebandes und dem Steuersignal; und
Addieren des Signals assoziiert mit den Sendungen und Teilen, um das modulierte Signal in dem Sendeband zu bilden.

6. Verfahren nach Anspruch 5, **gekennzeichnet dadurch, dass** jedes ausgewählte Signal verstärkt wird durch eine variable Verstärkung bevor es transformiert wird und/oder nachdem es transformiert wurde, und zwar in ein Signal, das wenigstens teilweise in dem Sendeband ist, wobei die Verstärkung abhängig ist von dem ausgewählten Signal.

7. Verfahren nach Anspruch 5, das in einem Empfänger (10) gemäß Anspruch 4 implementiert ist, verbunden durch Mittel des koaxialen Kabels (14), mit einer Verarbeitungseinheit (12) angepasst zum Verarbeiten des Signals moduliert in dem Sendeband, das durch den Empfänger in normaler Operation vorgesehen wird, wobei das Verfahren weiterhin Folgendes aufweist:
die Sendung von der Verarbeitungseinheit zu dem Empfänger von einer Anfrage bezogen auf eine bestimmte Frequenz;
die Sendung von dem Empfänger eines periodischen Signals entsprechend dem Empfang durch die Verarbeitungseinheit, wenn ein periodisches Signal bei der bestimmten Frequenz ist;
die Bestimmung durch die Verarbeitungseinheit der Leistung des empfangenen periodischen Signals bei der bestimmten Frequenz; und
die Bestimmung durch die Verarbeitungseinheit der Leistungsdämpfung durch das koaxiale Kabel von der Leistung des empfangenen periodischen Signals bei der bestimmten Frequenz und der Leistung des periodischen Signals, das von dem Empfänger gesendet wird.

8. Verfahren nach Anspruch 7, **gekennzeichnet dadurch, dass** der Empfänger (10) nacheinander über das koaxiale Kabel (14) sendet, und zwar beim Empfang von Anfragen von der Verarbeitungseinheit (12), von periodischen Signalen bei unterschiedlichen festen Frequenzen.

9. Verfahren nach Anspruch 7, wobei der Empfänger (10) über das koaxiale Kabel (14) ein periodisches Signal bei einer ersten Frequenz entsprechend dem Empfang durch die Verarbeitungseinheit (12) von einem periodischen Signal bei der bestimmten Frequenz vorsieht, und ein periodisches Signal bei einer zweiten Frequenz unterschiedlich zu der ersten Frequenz, wobei die Differenz zwischen den ersten und zweiten Frequenzen darstellen ist für die Leistung des periodischen Signals bei der ersten Frequenz, die von dem Empfänger gesendet wird.

10. Verfahren nach Anspruch 7, **gekennzeichnet dadurch, dass** jeder Frequenzsynthesizer (57) des Empfängers (10) angepasst ist zum direkten Senden zu dem entsprechenden Filter (BPFA bis BPFD) eines periodischen Signals, und wobei der Empfänger zur Verarbeitungseinheit (12) sendet, und zwar über das koaxiale Kabel (14), von einem Signal entsprechend der Summe der periodischen Signale vorgesehen durch die Frequenzsynthesizer, wobei jedes periodische Signal eine Frequenz gleich der Durchschnittsfrequenz von einem der Teile des Sendebands hat.
